# EUROPEAN PATENT APPLICATION

(11) **EP 2 177 781 A2**
(43) Date of publication of application: **21.04.2010**
(21) Application number: 09172562.2
(22) Date of filing: 08.10.2009
(51) Int. Cl.: F16D 48/06

(54) **Clutch controller and method for controlling clutch**

(30) Priority: 15.10.2008 JP 2008266548
(71) Applicant: Toyota Jidosha Kabushiki Kaisha, Toyota-shi, Aichi-ken, 471-8571 (JP)
(72) Inventor: Suga, Shojiro, Aichi-ken 471-8571 (JP); Watanabe, Hideo, Aichi-ken 471-8571 (JP); Takashiro, Yosuke, Aichi-ken 471-8571 (JP)
(74) Representative: Albutt, Anthony John

(57) **Abstract**

While the vehicle is decelerating, the torque that is transmittable by the clutch (300) is controlled to be decreased to a standby torque. The standby torque is determined so that a slip of the clutch (300) due to a friction torque of the engine (200) does not occur. That is, the torque that is transmittable by the clutch (300) is decreased within a range in which a slip of the clutch (300) due to the friction torque of the engine (200) does not occur.

## Description

### BACKGROUND OF THE INVENTION

### 1. Field of the Invention

The invention relates to a clutch controller and a method for controlling a clutch and, more specifically, to a technique for controlling a torque that is transmittable by the clutch during deceleration of a vehicle.

### 2. Description of the Related Art

There is known a vehicle equipped with an automatic clutch that uses an actuator to operate a clutch provided between an engine and a transmission. The automatic clutch is, for example, combined with a transmission that uses an actuator to shift gears in constantly meshed gears that is similar to those of a typical manual transmission. In addition, there is also known a double clutch transmission or dual clutch transmission (DCT) having two input shafts for which clutches are respectively provided. The DCT may also be called a twin-clutch gearbox. Other than that, the DCT is variously called by makers.

In the automatic clutch, in order to achieve a smooth shifting, or the like, it is desirable to accurately control a torque transmitted by the automatic clutch.

Japanese Patent Application Publication No. 2000-88009 (JP-A-2000-88009) describes an automatic clutch controller that, during a shifting of a transmission that is arranged between a drive source and drive wheels, holds an automatic clutch that is arranged between the transmission and the drive source in a standby state in which a slight torque is transmitted in a region that does not interfere with the shifting of the transmission. The automatic clutch controller decides a standby state so that the torque transmitted by the automatic clutch in the standby state decreases, with respect to a decrease in rotational resistance of the transmission, on the basis of a predetermined physical quantity related to the rotational resistance.

With the automatic clutch controller, the standby state is decided so as the torque transmitted by the automatic clutch decreases with respect to a decrease in the rotational resistance of the transmission. This suppresses an increase in the input shaft rotational speed or torque of the transmission in a standby state due to the decrease in rotational resistance caused by an increase in lubricating oil temperature. As a result, a malfunction in a shifting due to an increase in the input shaft rotational speed or torque is prevented.

Incidentally, during deceleration of a vehicle, it is required to maintain the automatic clutch engaged in order to use engine braking. On the other hand, when the automatic clutch is maintained engaged, disengagement (release) of the automatic clutch delays and possibly causing an engine to stall when a vehicle stops after deceleration. Thus, during deceleration of a vehicle, it is desirable to control the torque transmitted by the automatic clutch so as to handle both the engagement and disengagement requests of the automatic clutch.

However, the automatic clutch controller described in JP-A-2000-88009 is directed to achieving an optimal torque transmitted when the transmission shifts gears, and does not take into consideration an optimal torque transmitted during deceleration of the vehicle.

### SUMMARY OF THE INVENTION

The invention provides a clutch controller and a method for controlling a clutch, which is able to achieve an optimal torque transmitted during deceleration of a vehicle.

A first aspect of the invention relates to a clutch controller that controls a clutch that is provided between an engine and a transmission and that is operated by an actuator. The clutch controller includes: determination means that determines whether a vehicle is decelerating; and control means that, when the determination means determines that the vehicle is decelerating, controls the clutch so that a torque that is transmittable by the clutch decreases within a range in which a slip of the clutch due to a friction torque of the engine does not occur.

With the above aspect, when the vehicle is decelerating, the torque that is transmittable by the clutch is decreases within a range in which a slip of the clutch due to a friction torque of the engine does not occur. By so doing, it is possible to control the torque that is transmittable the clutch so that engine braking may be used when the vehicle is decelerating and so that the clutch may be immediately disengaged to decrease the torque that is transmittable by the clutch to zero when the vehicle stops. Thus, it is possible to provide a clutch controller, which is able to achieve an optimal torque transmitted during deceleration of the vehicle.

The control means may control the torque that is transmittable by the clutch to be further reduced when the friction torque of the engine is small as compared with when the friction torque of the engine is large.

The torque that is transmittable by the clutch is further decreased when the friction torque of the engine is small as compared with when the friction torque of the engine is large. By so doing, when the friction torque of the engine is small, the clutch may be further easily disengaged. This suppresses the engine to stall.

The control means may control the torque that is transmittable by the clutch to be further decreased when a rotational speed of the engine is low as compared with when the rotational speed of the engine is high.

The torque that is transmittable by the clutch is further decreased when the rotational speed of the engine is low as compared with when the rotational speed of the engine is high. By so doing, under the condition that the engine easily stalls because of a low engine rotational speed, the clutch may be further easily disengaged. This suppresses the engine to stall.

The control means may control the torque that is transmittable by the clutch to be further decreased when a coolant temperature of the engine is high as compared with when the coolant temperature of the engine is low.

As the coolant temperature of the engine is high, the viscosity of the lubricating oil of the engine decreases, so the friction torque of the engine reduces. Thus, the transmittable torque of the clutch is further decreased when the coolant temperature of the engine is high as compared with when the coolant temperature of the engine is low. By so doing, when the friction torque of the engine is small, the clutch may be further easily disengaged. This suppresses the engine to stall.

The determination means may determine that the vehicle is decelerating when an accelerator operation amount is smaller than a threshold.

It is determined that the vehicle is decelerating when the accelerator operation amount is smaller than a threshold. Thus, when a driver releases the accelerator, it is possible to reduce the torque that is transmittable by the clutch within a range in which a slip of the clutch due to a friction torque of the engine does not occur.

The determination means may determine that the vehicle is decelerating when a brake pedal is depressed.

The determination means may determine that the vehicle is decelerating when a speed of the vehicle is lower than or equal to a threshold.

The control means determines the torque that is transmittable by the clutch to cause the clutch to completely engage prior to an increase in torque of the engine.

A second aspect of the invention relates to a clutch controller that controls a clutch that is provided between an engine and a transmission and that is operated by an actuator. The controller for a clutch includes: determination means that determines whether a vehicle is decelerating; and control means that controls the clutch so that a torque that is transmittable by the clutch decreases. The control means controls an engagement force of the clutch when the determination means determines that the vehicle is decelerating to be smaller as compared with an engagement force of the clutch when the determination means determines that the vehicle is not decelerating.

The control means may control an engagement force of the clutch at the time when the determination means determines that the vehicle is decelerating and at least a shift of the transmission has been completed to be smaller as compared with an engagement force of the clutch at the time when the determination means determines that the vehicle is not decelerating and at least a shift of the transmission has been completed.

A third aspect of the invention relates to a method for controlling a clutch that is provided between an engine and a transmission and that is operated by an actuator. The method includes: determining whether a vehicle is decelerating; and, when it is determined that the vehicle is decelerating, controlling the clutch so that a torque that is transmittable by the clutch decreases within a range in which a slip of the clutch due to a friction torque of the engine does not occur.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a schematic configuration diagram that shows a vehicle;
FIG. 2 is a cross-sectional view that shows a clutch;
FIG. 3 is a view that shows a shift line map;
FIG. 4 is a functional block diagram of an ECU;
FIG. 5 is a graph that shows a standby torque;
FIG. 6 is a flowchart that shows the control structure of a programme executed by the ECU; and
FIG. 7 is a time chart that shows a change in torque transmitted by the clutch.

### DETAILED DESCRIPTION OF EMBODIMENTS

Hereinafter, an embodiment of the invention will be described with reference to the accompanying drawings. In the following description, like reference numerals denote like components. The like components have the same name and function. Thus, the detailed description thereof will not be repeated.

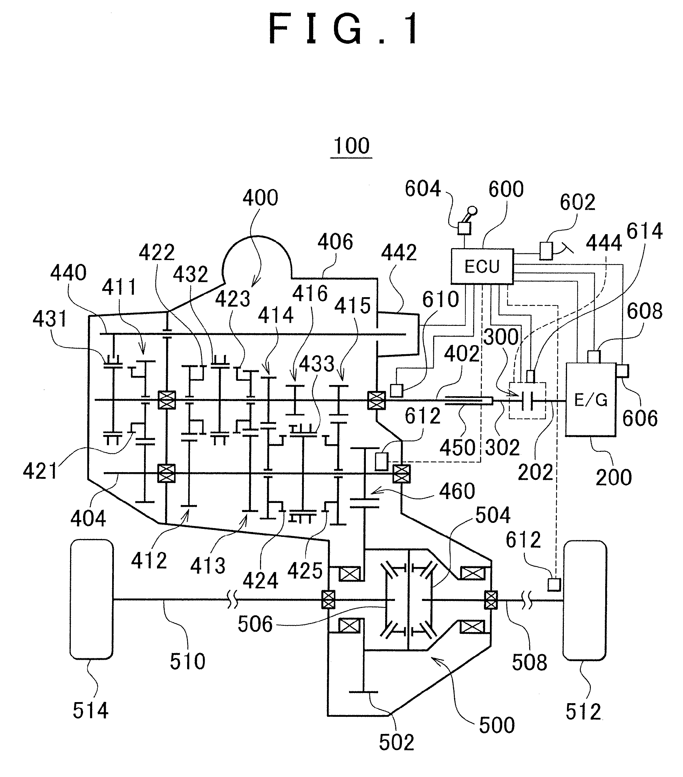

A vehicle equipped with a controller according to the embodiment of the invention will be described with reference to FIG. 1. The vehicle 100 is a front-engine front-drive (FF) vehicle. Note that the vehicle equipped with the controller according to the aspect of the invention is not limited to an FF vehicle.

The vehicle 100 is a clutch-pedal-less vehicle that establishes a desired gear by operating a constantly meshed gear transmission, similar to a typical manual transmission, and a clutch by an actuator. Note that the vehicle 100 may be equipped with a DCT having two input shafts for which clutches are respectively provided.

The vehicle 100 includes an engine 200, a clutch 300, a transmission 400, a differential gear (hereinafter, simply referred to as DG) 500 and an electronic control unit (ECU) 600. The controller according to this embodiment is, for example, implemented by a programme executed by the ECU 600. Note that the ECU 600 may be divided into an engine ECU and an electronic controlled transmission ECU (ECT-ECU). The engine ECU controls the engine 200. The ECT-ECU controls the transmission 400 and the clutch 300.

The engine 200 is an internal combustion engine that combusts an air-fuel mixture injected from an injector (not shown) in a cylinder to force a piston (not shown) downward to thereby rotate a crankshaft 202. The engine 200 is mounted on the vehicle 100 as a drive source. The vehicle 100 runs by driving force from the engine 200. Note that another power engine, such as a motor, may be mounted on the vehicle 100, instead of the engine 200.

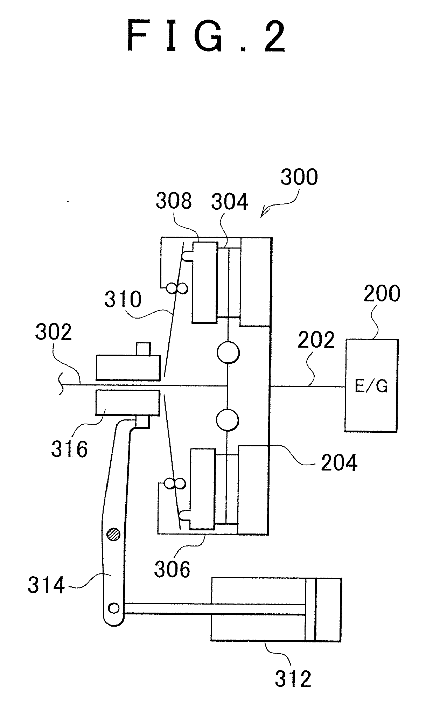

The clutch 300 is a dry single-plate friction clutch that is operated by an actuator 444. As shown in FIG. 2, the clutch 300 includes a clutch output shaft 302, a clutch disk 304, a clutch housing 306, a pressure plate 308, a diaphragm spring 310, a clutch release cylinder 312, a release fork 314 and a release sleeve 316. The clutch disk 304 is arranged on the clutch output shaft 302. The pressure plate 308 is arranged on the clutch housing 306.

As the diaphragm spring 310 urges the pressure plate 308 rightward in FIG. 2, the clutch disk 304 is pressed against a flywheel 204 secured to the crankshaft 202 of the engine 200. Thus, the clutch is engaged.

The clutch release cylinder 312 is used as one of components that constitute the actuator 444. As the clutch release cylinder 312 moves the release sleeve 316 via the release fork 314 rightward in FIG. 2, the inner end portion of the diaphragm spring 310 moves rightward in FIG. 2. As the inner end portion of the diaphragm spring 310 moves rightward in FIG. 2, the pressure plate 308 moves leftward in FIG. 2. Thus, the clutch disk 304 is separated from the flywheel 204 to disengage the clutch 300.

The clutch release cylinder 312 operates by hydraulic pressure supplied through a hydraulic circuit (not shown). The clutch release cylinder 312 is controlled by the ECU 600. A typical known clutch may be used for the clutch 300, so the detailed description thereof is omitted. Note that it is also applicable that the release sleeve 316 is moved by the driving force of a motor, or the like, so as to engage or disengage the clutch 300 by electric power. In addition, a wet multiple-plate clutch that operates by hydraulic pressure may be used as the clutch 300.

Referring back to FIG. 1, the transmission 400 includes an input shaft 402, an output shaft 404 and a housing 406. The transmission 400 is accommodated in the housing 406 together with the DG 500. The transmission 400 is a constantly meshed gear transmission.

The input shaft 402 is provided in parallel with the output shaft 404. A plurality of shift gear pairs 411 to 415 having different gear ratios and a reverse gear pair 416 are arranged between the input shaft 402 and the output shaft 404.

Between two gears that constitute each of the shift gear pairs, one of the two gears is provided on the input shaft 402, and the other one of the two gears is provided on the output shaft 404. In addition, between two gears that constitute each of the shift gear pairs, one of the two gears is idly rotatable with respect to the shaft on which the gear is provided, and the other one of two gears integrally rotates with the shaft on which the gear is provided. Two gears that constitute each of the shift gear pairs are constantly meshed with each other.

Clutch gears 421 to 425 are provided in correspondence with the shift gear pairs 411 to 415, respectively. Synchromesh mechanisms 431 to 433 are provided between the shafts and the clutch gears 421 to 425. The synchromesh mechanisms 431 to 433 synchronise the rotational speeds of the shafts with the rotational speeds of the clutch gears 421 to 425 and then couple the shafts with the clutch gears 421 to 425, respectively. Any one of the clutch gears 421 to 425 is coupled to the shaft by any one of the synchromesh mechanisms 431 to 433 to establish any one of the first-speed gear to the fifth-speed gear. When all the clutch gears are not coupled to the shafts, the transmission 400 is in a neutral state.

The reverse gear pair 416 is meshed with a reverse idle gear arranged on a counter shaft (not shown). As the reverse gear pair 416 is meshed with the reverse idle gear, the reverse gear is established.

The synchromesh mechanisms 431 to 433 are actuated by an actuator 442 via a fork shaft 440. The actuator 442 is controlled by the ECU 600. Each of the synchromesh mechanisms 431 to 433 is a key synchromesh mechanism. Note that a double-cone synchromesh mechanism may be used instead of the key synchromesh mechanism.

The input shaft 402 is coupled to the clutch output shaft 302 of the clutch 300 via a spline 450. An output gear 460 is arranged on the output shaft 404 and is meshed with a ring gear 502 of the DG 500.

The DG 500 includes a pair of side gears 504 and 506. Drive shafts 508 and 510 are respectively coupled to the side gears 504 and 506 by spline fitting, or the like. Power is transmitted to the left and right front wheels 512 and 514 via the drive shafts 508 and 510.

An accelerator operation amount sensor 602, a position switch 604, a rotational speed sensor 606, a coolant temperature sensor 608, an input rotational speed sensor 610, an output rotational speed sensor 612 and a stroke sensor 614 are connected to the ECU 600.

The accelerator operation amount sensor 602 detects an accelerator operation amount and transmits a signal that indicates a detected result to the ECU 600.

The position switch 604 detects a position of a shift lever and transmits a signal that indicates a detected result to the ECU 600. The gear of the transmission 400 is automatically established in accordance with a range (for example, D range) corresponding to the position of the shift lever. It is also applicable that a manual shifting mode may be selected to allow a driver to select a gear through manual operation.

The rotational speed sensor 606 detects an engine rotational speed NE and transmits a signal that indicates a detected result to the ECU 600.

The coolant temperature sensor 608 detects a temperature of coolant of the engine 200 and transmits a signal that indicates a detected result to the ECU 600.

The input rotational speed sensor 610 detects a rotational speed of the input shaft 402 and transmits a signal that indicates a detected result to the ECU 600.

The output rotational speed sensor 612 detects a rotational speed of the output shaft 404 and transmits a signal that indicates a detected result to the ECU 600. A vehicle speed is calculated from the rotational speed of the output shaft 404. For example, the vehicle speed is obtained by dividing the rotational speed of the output shaft 404 by the gear ratio of the DG 500, and then multiplying the quotient by the circumference of the front wheel 512 or 514. Note that a known typical method may be used for calculating a vehicle speed, so the detailed description thereof is omitted here.

The stroke sensor 614 detects a stroke of the clutch 300, that is, a stroke of the actuator 444 (position of the release sleeve 316), and transmits a signal that indicates a detected result to the ECU 600.

The ECU 600 controls peripheral devices so that the vehicle 100 attains a desired running state on the basis of signals transmitted from these sensors 602 to 614, a throttle opening degree sensor (not shown), and the like, and maps and programmes stored in a read only memory (ROM).

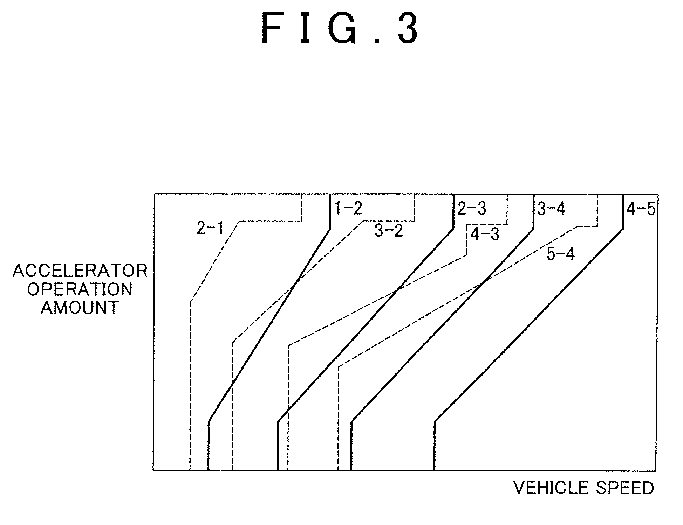

In this embodiment, the ECU 600 determines a gear to be established on the basis of a shift line map shown in FIG. 3. In the shift line map, a gear to be established is determined on the basis of a vehicle speed and an accelerator operation amount. As the accelerator operation amount increases, a lower speed gear is required. That is, as the accelerator operation amount increases, a higher gear ratio is required. In addition, as the vehicle speed increases, a higher speed gear is required. That is, as the vehicle speed increases, a lower gear ratio is required.

In FIG. 3, upshift lines indicated in solid line determine upshift conditions, that is, a vehicle speed and an accelerator operation amount at which upshift is performed. Downshift lines indicated in dotted line determine downshift conditions, that is, a vehicle speed and accelerator operation amount at which downshift is performed. As shown in FIG. 3, hystereses are formed between the upshift lines and the downshift lines.

For example, when the operating state of the vehicle detected by a combination of the vehicle speed and the accelerator operation amount shifts from a left side region to a right side region with respect to an upshift line, it is determined that the upshift condition is satisfied. On the other hand, when the operating state of the vehicle determined by a combination of the vehicle speed and the accelerator operation amount shifts from the right side region to the left side region with respect to an upshift line, it is determined that the upshift condition is not satisfied. It is determined for each combinations of shifting (combination of a gear before upshift and a gear after upshift) as to whether the upshift condition is satisfied or not satisfied.

Similarly, the operating state of the vehicle determined by a combination of the vehicle speed and the accelerator operation amount shifts from the right side region to the left side region with respect to a downshift line, it is determined that the downshift condition is satisfied. On the other hand, when the operating state of the vehicle determined by a combination of the vehicle speed and the accelerator operation amount shifts from the left side region to the right side region with respect to a downshift line, it is determined that the downshift condition is not satisfied. It is determined for each combinations of shifting (combination of a gear before downshift and a gear after downshift) as to whether the downshift condition is satisfied or not satisfied.

Note that a known typical shift line map may be used for the shift line map, so the detailed description thereof is omitted here.

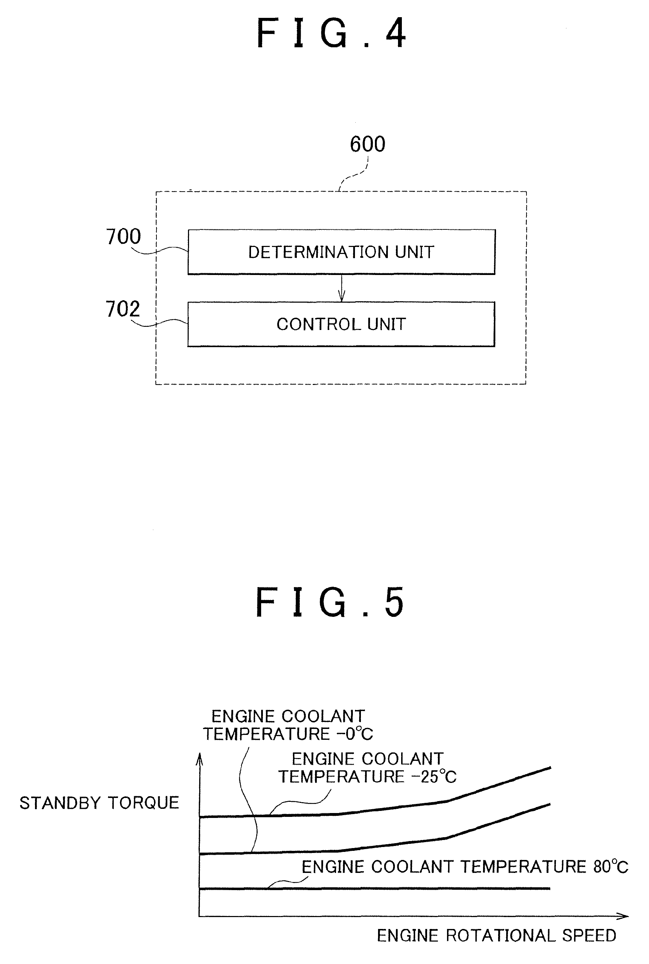

The ECU 600 will be further described with reference to FIG. 4. Note that the functions of the ECU 600 described below may be implemented by software or may be implemented by hardware.

The ECU 600 includes a determination unit 700 and a control unit 702. The determination unit 700 determines whether the vehicle is decelerating. For example, the determination unit 700 determines that the vehicle is decelerating when the accelerator operation amount is smaller than a threshold. The threshold is, for example, set at a value at which it is presumable that the accelerator is released, that is, a value at which it is presumable that the accelerator operation amount is zero.

When the vehicle is decelerating, the control unit 702 controls the clutch 300 so that the torque that is transmittable by the clutch 300 decreases within a range in which a slip of the clutch 300 due to a friction torque (a negative torque generated by friction, and the value has correlation with the engine rotational speed NE and the engine coolant temperature) of engine 200 does not occur.

More specifically, as shown in FIG. 5, the clutch 300 is controlled so that the torque that is transmittable by the clutch 300 decreases to a standby torque. The standby torque is determined in accordance with a map that uses the coolant temperature of the engine 200 and the engine rotational speed NE as parameters.

Note that the torque that is transmittable by the clutch 300 is determined on the basis of a stroke of the clutch 300, that is, a position of the release sleeve 316. Thus, the clutch 300 is controlled so that the release sleeve 316 moves to a position at which the torque that is transmittable by the clutch 300 is a standby torque.

The standby torque is determined so that a slip of the clutch 300 due to a friction torque of the engine 200 does not occur. That is, the standby torque is determined so as to be able to use engine braking.

By so doing, it is possible to control the torque that is transmittable by the clutch 300 so that engine braking may be used when the vehicle is decelerating and so that the clutch 300 may be immediately disengaged to reduce a transmittable torque to zero when the vehicle stops.

In addition, the standby torque is decided so that the engine rotational speed NE does not rapidly increase when the vehicle accelerates again (when the accelerator is depressed). That is, the standby torque is decided so that the clutch 300 can completely engage prior to an increase in engine torque.

The standby torque is decided to be smaller when the friction torque of the engine 200 is small as compared with when the friction torque of the engine 200 is large. That is, as shown in FIG. 5, the standby torque is decided to be smaller when the coolant temperature of the engine 200 is high as compared with when the coolant temperature of the engine 200 is low.

By so doing, when the friction torque of the engine 200 is small, the clutch 300 may be further easily disengaged. This suppresses the engine 200 to stall.

In addition, the standby torque is decided to be smaller when the engine rotational speed NE is low as compared with when the engine rotational speed NE is high. By so doing, under the condition that the engine 200 easily stalls because of a low engine rotational speed NE, the clutch 300 may be further easily disengaged. This suppresses the engine 200 to stall. Note that a method of setting the standby torque is not limited to the above.

That is, the standby torque is controlled so that the clutch 300 is completely engaged when the vehicle is not decelerating. Here, the complete engagement means a range within which the engagement force is larger as compared with the engagement force near the range in which a slip of the clutch 300 occurs. Note that the friction torque of the clutch 300 according to this embodiment is controlled to an engagement force near the range in which a slip of the clutch 300 occurs when it is determined that the vehicle is decelerating. That is, according to the aspect of the invention, it is only necessary that an engagement force of the clutch 300 when the ECU 600 determines that the vehicle is decelerating is controlled to be smaller as compared with when the ECU 600 determines that the vehicle is not decelerating.

In addition, an engagement force of the clutch 300, when the ECU 600 determines that the vehicle is decelerating and at least a shift of the transmission 400 has been completed, may be controlled to be smaller as compared with when the ECU 600 determines that the vehicle is not decelerating and at least a shift of the transmission 400 has been completed.

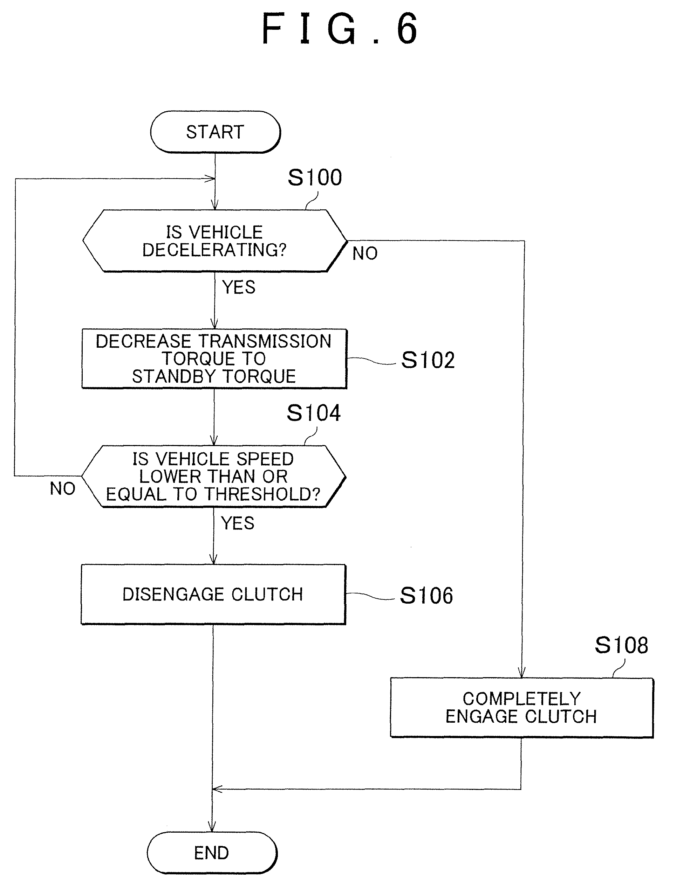

The control structure of a programme executed by the ECU 600 will be described with reference to FIG. 6. Note that the programme described below is repeatedly executed at predetermined time intervals.

In step (hereinafter, step is abbreviated to S) 100, the ECU 600 determines whether the vehicle is decelerating. That is, the ECU 600 determines whether the accelerator operation amount is smaller than a threshold (whether the accelerator is released). When the vehicle is decelerating (YES in S100), the process proceeds to S102. When the determination is negative (NO in S100), the process proceeds to S108.

In S102, the ECU 600 controls the torque that is transmittable by the clutch 300 so that the torque that is transmittable by the clutch 300 becomes a standby torque.

In S104, the ECU 600 determines whether the vehicle speed is lower than or equal to a threshold. When the vehicle speed is lower than or equal to the threshold (YES in S104), the process proceeds to S106. When the determination is negative (NO in S104), the process returns to S100.

In S106, the ECU 600 disengages the clutch 300. That is, the ECU 600 decreases the torque transmitted by the clutch 300 to zero.

When it is determined that the vehicle is not decelerating (NO in S100), the ECU 600 causes the clutch 300 to completely engage in S108.

The operations of the clutch according to this embodiment based on the above described structure and flowchart will be described.

When the accelerator is depressed, that is, when the vehicle is not decelerating (NO in S100), the clutch 300 is completely engaged (S108).

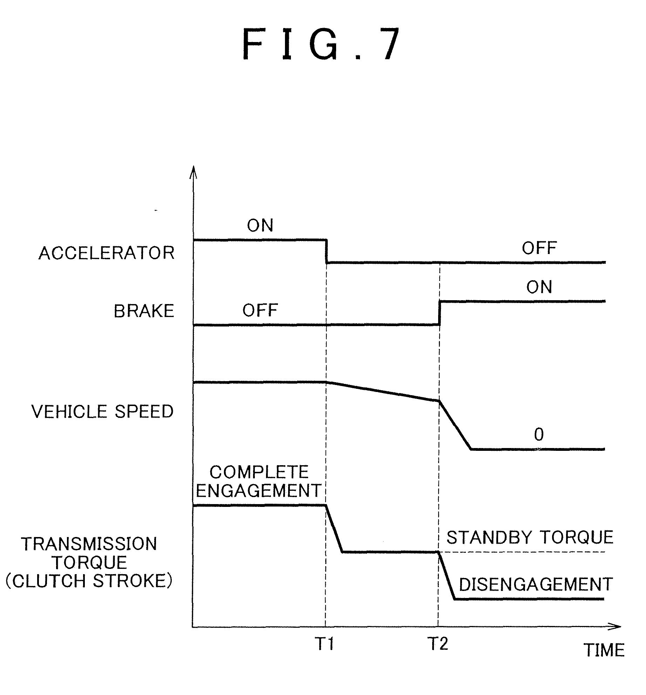

At time T1 in FIG. 7, when the accelerator is released while the vehicle is running, it is determined that the vehicle is decelerating (YES in S100). While the vehicle is decelerating, the torque that is transmittable by the clutch 300 is decreased to a standby torque (S102). By so doing, the torque that is transmittable by the clutch 300 is decreased within the range in which a slip of the clutch 300 due to the friction torque of the engine 200 does not occur. Thus, it is possible to use engine braking during deceleration.

After that, at time T2 in FIG. 7, when a brake pedal is depressed and then the vehicle speed is decreased to a threshold or below (YES in S104), the clutch 300 is disengaged (S106). When the clutch 300 is disengaged, the torque that is transmittable by the clutch 300 is decreased to the standby torque. Thus, it is possible to immediately disengage the clutch 300. This suppresses the engine 200 to stall.

Note that it is also applicable that a state of deceleration (while the vehicle is decelerating) is determined through a brake pedal operation.

The above described embodiment is illustrative and not restrictive in all respects. The scope of the invention is defined by the appended claims rather than the above description. The scope of the invention is intended to encompass all modifications within the scope of the appended claims and equivalents thereof.

## Claims

1. A clutch controller (600) that controls a clutch (300) that is provided between an engine (200) and a transmission (400) and that is operated by an actuator (444), the clutch controller (600) **characterised by** comprising:
determination means that determines whether a vehicle is decelerating; and
control means that, when the determination means determines that the vehicle is decelerating, controls the clutch (300) so that a torque that is transmittable by the clutch (300) decreases within a range in which a slip of the clutch (300) due to a friction torque of the engine (200) does not occur.

2. The clutch controller (600) according to claim 1, wherein the control means controls the torque that is transmittable by the clutch (300) to be further decreased when the friction torque of the engine (200) is small as compared with when the friction torque of the engine (200) is large.

3. The clutch controller (600) according to claim 1 or 2, wherein the control means controls the torque that is transmittable by the clutch (300) to be further decreased when a rotational speed (NE) of the engine is low as compared with when the rotational speed (NE) of the engine is high.

4. The clutch controller (600) according to any one of claims 1 to 3, wherein the control means controls the torque that is transmittable by the clutch (300) to be further decreased when a coolant temperature of the engine is high as compared with when the coolant temperature of the engine is low.

5. The clutch controller (600) according to any one of claims 1 to 4, wherein the determination means determines that the vehicle is decelerating when an accelerator operation amount is smaller than a threshold.

6. The clutch controller (600) according to any one of claims 1 to 4, wherein the determination means determines that the vehicle is decelerating when a brake pedal is depressed.

7. The clutch controller (600) according to claim 5 or 6, wherein the determination means determines that the vehicle is decelerating when a speed of the vehicle is lower than or equal to a threshold.

8. The clutch controller (600) according to any one of claims 1 to 7, wherein the control means determines the torque that is transmittable by the clutch (300) to cause the clutch (300) to completely engage prior to an increase in torque of the engine (200).

9. A clutch controller (600) that controls a clutch (300) that is provided between an engine (200) and a transmission (400) and that is operated by an actuator (444), the clutch controller (600) **characterised by** comprising:
determination means that determines whether a vehicle is decelerating; and
control means that controls the clutch (300) so that a torque that is transmittable by the clutch (300) decreases,
wherein the control means controls an engagement force of the clutch (300) when the determination means determines that the vehicle is decelerating to be smaller as compared with an engagement force of the clutch (300) when the determination means determines that the vehicle is not decelerating.

10. The clutch controller (600) according to claim 9, wherein the control means controls an engagement force of the clutch (300) at the time when the determination means determines that the vehicle is decelerating and at least a shift of the transmission (400) has been completed to be smaller as compared with an engagement force of the clutch (300) at the time when the determination means determines that the vehicle is not decelerating and at least a shift of the transmission (400) has been completed.

11. A method for controlling a clutch (300) that is provided between an engine (200) and a transmission (400) and that is operated by an actuator (444), the method **characterised by** comprising:
determining whether a vehicle is decelerating; and
when it is determined that the vehicle is decelerating, controlling the clutch (300) so that a torque that is transmittable by the clutch (300) decreases within a range in which a slip of the clutch (300) due to a friction torque of the engine (200) does not occur.
